# EUROPÄISCHE PATENTANMELDUNG

(11) **EP 0 795 818 A1**
(43) Veröffentlichungstag der Anmeldung: **17.09.1997**
(21) Anmeldenummer: 96104220.7
(22) Anmeldetag: 16.03.1996
(51) Int. Cl.: G06F 7/52

(54) **Multiplizierer mit unterschiedlicher Auflösung für einen Signalprozessor**

(71) Anmelder: Deutsche ITT Industries GmbH, 79108 Freiburg (DE)
(72) Erfinder: Temerinac, Miodrag, Prof. Dr.-Ing., 79194 Gundelfingen (DE); Bock, Christian, Dr., 79108 Freiburg (DE)

(57) **Zusammenfassung**

Digitaler Multiplizierer (100) für einen Signalprozessor, in dessen Signalpfad in beliebiger Reihenfolge eine erste Stellenschiebeeinrichtung (110 ) als Grobmultiplizierer und ein Feinmultiplizierer (120) liegt, der einen Signaleingang (121) mit a Binärstellen, einen Steuereingang (122) mit b Binärstellen und einen Signalausgang (123) mit e Binärstellen enthält. Der Multiplizierer enthält ferner eine zweite Stellenschiebeeinrichtung (130), die dem Steuereingang (122) des Feinmultiplizierers (120) vorgeschaltet und mit einem primären Steuersignal (sp) von c Stellen gespeist ist, von denen b Stellen über die zweite Stellenschiebeeinrichtung als sekundäres Steuersignal (sb) dem Steuereingang (122) des Feinmultiplizierers (120) zugeführt sind, und zur Erhöhung der Auflösung in mindestens einem Multiplikationsbereich (mt) ist das primäre Steuersignal (sp) um den Zweierpotenzwert 2^{d} höher und das Ausgangssignal (so) der ersten Stellenschiebeeinrichtung (110) um den Zweierpotenzwert 2^{d} niedriger gewichtet.

## Beschreibung

Die Erfindung betrifft einen digitalen Multiplizierer für einen Signalprozessor, in dessen Signalpfad in beliebiger Reihenfolge ein Grobmultiplizierer und ein Feinmultiplizierer liegt. Derartige Multiplizierer werden verwendet, um digitalisierte Signale zu verstärken oder abzuschwächen, wobei die Multiplikation beispielsweise auch frequenz- oder amplitudengesteuert adaptiv mit unterschiedlichen Faktoren erfolgen kann. In der digitalen Signalverarbeitung hat sich weitgehend die normierte Darstellung digitalisierte Signale durchgesetzt. Der einzelne Signalwert entspricht dabei einer binär codierten Dualzahl, wobei der maximale, mit n Binärstellen darstellbare Signalumfang den Bezugswert für die Normierung bildet. Der normierte Wertebereich für das digitalisierte Signal liegt damit zwischen 0 bis +1, sofern nur positive Signalwerte zu codieren sind. Bei der Verwendung positiver und negativer Signalwerte, z.B. in der Zweierkomplement-Zahlendarstellung, bildet der mit n Binärstellen darstellbare Signalumfang den normierten Wertebereich von -1 bis +1. Man kann in beiden Fällen auch von einer Festkommadarstellung sprechen, der die normierten Wertebereiche 0 bis 0.999.. oder die Wertebereiche -1,000.. bis +0.999.. zugeordnet sind. Entsprechend der binären Stellenarzahl n wird der normierte Wertebereich in 2ⁿ-1 Teilbereiche unterteilt, wodurch letztlich die maximale Auflösung des digitalisierten Signals bestimmt wird.

Die normierte Signaldarstellung hat den Vorteil, daß unabhängig von der jeweiligen Signalauflösung die MSB-Stellen im Signalpfad fest definiert sind - und damit auch die sich daran anschließenden höher- und niederwertigen Binärstellen. Eine Stellenbeschneidung im LSB-Bereich hat somit außer der geringeren Auflösung keine weitere negative Wirkung auf das digitalisierte Signal.

Ein Multiplizierer, der an beiden Eingängen mit Signalwerten gespeist ist, die dem Betrag nach kleiner als 1 sind, kann natürlich nicht verstärken sondern den jeweiligen Signalwert nur verkleinern. Eine Verstärkung wird indessen durch eine Binärstellenverschiebung erreicht, bei der die Stellenzuordung der Daten geändert wird. Somit sind bei Bedarf den Multiplizierern derartige Stellenverschiebeeinrichtungen, die auch als Grobmultiplizierer bezeichnet werden, zugeordnet, mit denen eine Multiplikation oder Division mit Zweierpotenzwerten 2ⁿ bzw. 1/2ⁿ auf einfache Weise durchführbar ist.

Signalprozessoren arbeiten meist im Echtzeitbetrieb, so daß für die einzelnen Multiplikationen nur ein einziger Takt oder nur sehr wenige Takte zur Verfügung stehen. Es werden daher in der Regel Multiplizierer in Pipeline-, Parallel- oder Array-Technik verwendet, deren Flächenbedarf bei der monolithischen Integration proportional zum Produkt der Binärstellenanzahl zunimmt. Zusätzlich vergrößert sich auch die erforderliche Rechenzeit. Aus beiden Gründen verzichtet man meist auf die maximale Auflösung des Multiplikationsergebnisses und kürzt den Rechenaufwand dadurch ab, daß ein großer Teil niederwertiger LSB-Stellen gar nicht berechnet wird, weil ihr Beitrag für die weitere Signalverarbeitung meist vernachlässigbar ist.

Eine weitere Einsparung des Rechenaufwandes ist auch über eine Stellenbeschneidung der zugeführten Signale möglich, indem Stellen im LSB-Bereich unterdrückt werden. Mittels digitaler Filterschaltungen kann der Auflösungsverlust der angesprochenen Verfahren später wieder weitgehend kompensiert werden, so daß die Einsparmaßnahmen am Multiplizierer in der Regel ohne schädliche Auswirkungen sind.

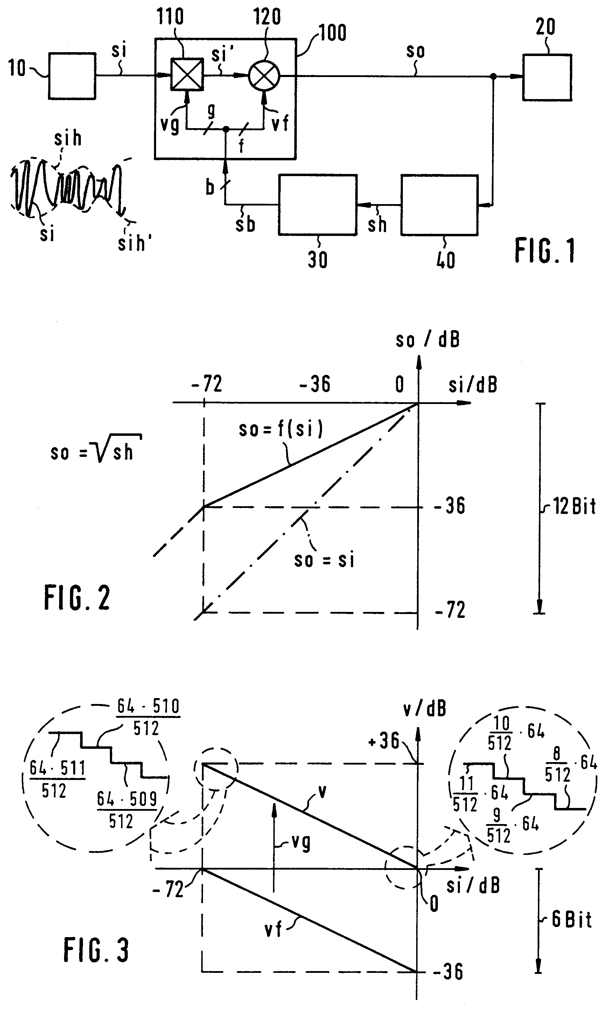

In besonderen Fällen ist es jedoch wünschenswert, daß ein derartiger Multiplizierer in einem oder in mehreren Multiplikationsbereichen eine höhere Auflösung als die vorgegebene Grundauflösung aufweist. Dies ist beispielsweise bei einem Multiplizierer der Fall, der in einem digitalen Sprachkompressor eingesetzt werden soll, dessen eingangsseitiger Dynamikumfang von 0 dB bis -72 dB ausgangsseitig auf 0 dB bis -36 dB zu komprimieren ist, vgl. Fig. 2. Das ist eine gleitende Komprimierung, deren jeweiliger Komprimierungsfaktor über eine invertierte Quadratwurzelfunktion aus dem jeweiligen Hüllkurvenwert des Ein- oder Ausgangssignals gebildet wird. Dies bedeutet, daß schwache Signale um bis zu +36 dB, das enspricht ca. einem Faktor 64, angehoben werden können. Starke Sprachsignale werden nicht mehr verstärkt - die Verstärkung wird in diesem Bereich allmählich bis auf 0 dB zurückgenommen. Zur Realisierung der Verstärkung ist dem eigentlichen Multiplizierer, also dem Feinmultiplizierer, eine Stellenverschiebeeinrichtung vor- oder nachgeschaltet, mit der die Stellenzuordnung um 6 Binärstellen geändert wird, so daß die einzelnen Wertigkeiten um den Faktor 64 = 2⁶ höher gewichtet sind, was einer Grundverstärkung von ca. +36 dB entspricht. Wenn im Feinmultiplizierer nun das digitalisierte Signal mit einem Faktor von 1/64 = 0,0156 multipliziert wird, dann resultiert daraus eine Gesamtverstärkung über den Grob- und Feinverstärker von 0 dB. Wenn der Feinverstärker dagegen das digitalisierte Signal mit dem Faktor 1 bzw. 0 dB multipliziert, dann folgt daraus ein Gesamtverstärkung mit dem Faktor 64 bzw. ca. +36 dB.

Aus diesem Beispiel wird ersichtlich, daß die Feinmultiplikation mit einem kleinen Faktor 1/64 = 0,0156 bezüglich der Auflösung kritisch werden kann, weil dann die Nachbarwerte zu diesem Faktor relativ große Änderungen darstellen, die bei der Gesamtmultiplikation proportional mitgeführt werden. Wenn mit diesem kleinen Faktor ein großes Signal zu multiplizieren ist, dann resultieren daraus im Absoluten große Signalsprünge, die nicht mehr vernachlässigbar sind. Weist beispielsweise der normierte Bereich von 0 bis 1 infolge der vorgegebenen Auflösung 512 Stufen oder unterscheidbare Schwellen auf, dann entspricht der kleine Wert 1/64 der Summe aus acht Teilbereichen des normierten Bereiches - nämlich 8/512 . Der nächsthöhere Wert 9/512 ist um 12,5 Prozent größer. Dies ist ein deutlicher Sprung, der für viele Anwendungen zu groß ist. Eine ausführliche Erörterung dieses Beispieles findet sich im Zusammenhang mit der nachfolgenden Figurenbeschreibung.

Es ist daher Aufgabe der Erfindung, einen verbesserten Multiplizierer für Signalprozessoren anzugeben, dessen Auflösung gegenüber einer vorgegebenen Grundauflösung in mindestens einem Multiplikationsbereich erhöht ist.

Die Aufgabe wird entsprechend den Merkmalen des Anspruchs 1 wie folgt gelöst:
- der Multiplizierer enthält in seinem Signalpfad in beliebiger Reihenfolge eine erste Stellenschiebeeinrichtung als Grobmultiplizierer und einen Feinmultiplizierer, der einen Signaleingang mit a Binärstellen, einen Steuereingang mit b Binärstellen und einen Signalausgang mit e Binärstellen enthält,
- der Multiplizierer enthält ferner eine zweite Stellenschiebeeinrichtung, die dem Steuereingang des Feinmultiplizierers vorgeschaltet und mit einem primären Steuersignal von c Stellen gespeist ist, von denen b Stellen über die zweite Stellenschiebeeinrichtung als sekundäres Steuersignal dem Steuereingang des Feinmultiplizierers zugeführt sind, und
- der Multiplizierer enthält eine Steuereinrichtung, der das primäre Steuersignal zugeführt ist und die zur Erhöhung der Auflösung in mindestens einem Multiplikationsbereich in Abhängikeit vom primären Steuersignal ein erstes und zweites Schiebesignal für die erste bzw. zweite Stellenschiebeeinrichtung erzeugt, wodurch
   -- das sekundäre Steuersignal, unter Einbeziehung von d sich in LSB-Richtung anschließenden Stellen des primären Steuersignals, um den Zweierpotenzwert 2^{d} höher und
   -- das Ausgangssignal der ersten Stellenschiebeeinrichtung um den Zweierpotenzwert 2^{d} niedriger gewichtet sind.

Ein Vorteil der Erfindung besteht darin, daß die Erhöhung der Auflösung indiviuell an die jeweilige Anforderung über die Vorgabe des begrenzten Multiplikationsbereiches angepaßt werden kann. Dieser Bereich kann dabei größer oder kleiner sein. Im einfachsten Fall gibt man dem primären Steuersignal eine Schwelle vor, beispielweise indem drei oder mehr höchstwertige Binärstellen jeweils den Wert 0 aufweisen, wodurch der begrenzte Multiplikationsbereich bereits festgelegt ist. Es ist auch möglich, daß mit der Erfindung mindestens ein weiterer Multiplikationsbereich mit ebenfalls verbesserter Auflösung definiert werden kann, wobei die Auflösungen zum ersten begrenzten Bereich gleich oder unterschiedlich sein können. Es ist auch nicht erforderlich, daß sich die einzelnen Multiplikationsbereiche aneinander anschließen.

Die Multiplizierer nach der Erfindung weisen gegenüber den bekannten Multiplizierern die geringsten Änderungen auf, wenn die zusätzlichen Stellenschiebeeinrichtungen durch elektronische Mehrebenenumschalter (= Multiplexer) realisiert sind, weil dann die einzelnen Datenleitungen nur versetzt abgegriffen werden müssen. Dadurch bleibt der zusätzliche Flächenaufwand bei der monolithischen Integration minimal. Die Steuerleitung zur Stellenverschiebung umfaßt in diesem Fall nur ein einziges Steuerbit.

Der Multiplizierer nach der Erfindung stellt in Verbindung mit einem Funktionsgenerator, der den jeweiligen Multiplikationsfaktor bestimmt und im Ausführungsbeispiel aus einer digitalen Invertierungseinrichtung besteht, die von einem digitalen Hüllkurvendetektor gespeist ist, eine vorteilhafte Kombination für einen Signalkompressor oder Signalexpander dar, weil die einzelnen Funktionsblöcke aufeinem einzigen Chip wegen des geringen Flächenbedarfs monolithisch integrierbar sind. Es sind hierbei spezielle Näherungsverfahren von Vorteil, die beispielsweise für den Funktionsgenerator oder Hüllkurvendetektor eine Quadratwurzelfunktion bilden. Daneben sind die erforderlichen digitalen Tiefpaßfilter oder Integratoren ebenfalls leicht realisierbar.

Die Erfindung und weitere vorteilhafte Ausgestaltungen werden nun anhand der Figuren der Zeichnung näher erläutert:
- Fig. 1: zeigt schematisch entsprechend dem Stand der Technik einen digitalen Multiplizierer, der beispielsweise in einem Signalprozessor zur Signalkomprimierung verwendet wird,
- Fig. 2: zeigt den zugehörigen Verstärkungs- oder Komprimierungsverlauf,
- Fig. 3: verdeutlicht die Nachteile der in Fig. 1 dargestellten Schaltungsanordnung,
- Fig. 4: zeigt ein Ausführungsbeispiel eines Multiplizierers nach der Erfindung,
- Fig. 5: zeigt ein weiteres Ausführungsbeispiel des Multiplizierers,
- Fig. 6: zeigt den Multiplizierer in einer vorteilhaften Signalkompressionschaltung und
- Fig. 7: zeigt das zugehörige Verstärkungs- oder Kompressionsdiagramm.

In Fig. 1 liefert eine interne oder externe digitale Signalquelle 10 ein digitales Eingangssginal si an einen digitalen Multiplizierer 100. Dieser enthält in der Regel eine Stellenschiebeeinrichtung 110 und einen Feinmultiplizierer 120, wobei die Reihenfolge im Signalpfad beliebig ist. Die Stellenschiebeeinrichtung 110 wird auch als Grobmultiplizierer bezeichnete, weil sie nur eine Verstärkung oder Absenkung mit ganzen Zweierpotenzwerten 2ⁿ bzw. 1/2ⁿ mittels einer Binärstellenverschiebung zuläßt. Eine Stellenverschiebung der Daten auf dem Datenpfad in MSB-Richtung entspricht einer Verstärkung oder einer Multiplikation und eine Verschiebung in LSB-Richtung einer Division des zugeführten Signals si mit Zweierpotenzwerten. Die jeweilige Stellenverschiebung um die Binärstellenanzahl g wird durch einen Grobmultiplikationsfaktor vg bestimmt.

Der Feinmultiplizierer 120 ist hingegen ein echter Multiplizierer, der den Wert des stellenverschobenen Eingangssignals si' mit einem Feinmultiplikationsfaktor vf digital multipliziert. Das Ausgangssignal so des gesamten Verstärkers 100, das nun die gewünschte Verstärkung/Absenkung v entsprechend einem Steuersignal sb aufweist, ist weiteren digitalen Signalverarbeitungseinrichtungen 20 zugeführt.

Durch die Aufspaltung in Grob- und Feinmultiplizierer wird der gesamte Multiplikationsaufwand reduziert, weil nicht mehr alle Stellen des Eingangs- und Steuersignals si bzw. sb miteinander multipliziert werden müssen. Der Multiplizierer 100 arbeitet in Modulo-Arithmetik, bei der die b Binärstellen des Steuersignals sb einer Festkommadarstellung entsprechen, indem die vor dem Komma liegenden g Binärstellen den jeweiligen Zweierpotenzwert 2ⁿ oder 2 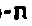 liefern und die nach dem Komma liegenden f Binärstellen den Feinmultiplikationsfaktor vf.

Das Steuersignal sb und die zugehörige Modulo-Codierung liefert als Funktionsgenerator eine Steuersignalquelle 30, die über eine Filtereinrichtung 40 beispielsweise mit dem Eingangssignal si oder dem Ausgangssignal so oder einem anderen Signal gespeist ist. Im genannten Anwendungsbeispiel bei einem Signalkompressor kann die Filtereinrichtung 40 einen Hüllkurvendetektor enthalten, der aus dem Eingangs- oder Ausgangssignal si bzw. so ein Hüllkurvensignal sih bzw. sh bestimmt, dessen jeweiliger Wert einen Inverter bzw. Quotientenbildner in der Steuersignalquelle 30 steuert.

Fig. 2 zeigt in einem doppelten dB-Diagramm das Ausgangssignal so oder die Gesamtverstärkung v in Abhängigkeit vom Eingangssignal si, wobei mittels der Steuersignalquelle 30 eine Quadratwurzelbeziehung zwischen dem Ausgangssignal so und dem Eingangssignal si bewirkt wird. Dadurch wird der zwischen 0 dB und -72 dB liegende Dynamikbereich des Eingangssignals si ausgangsseitig auf einen zwischen 0 dB und -36 dB liegenden Dynamikbereich komprimiert. Ein Dynamikunterschied von 72 dB entspricht einer Binärstellenverschiebung von 12 Stellen. Demgegenüber weist das komprimierte Ausgangssignal so einen reduzierten Dynamikumfang auf, der nur noch einer Stellenverschiebung von 6 Binärstellen entspricht. Es wird darauf hingewiesen, daß der Dynamikumfang von 12 Bit bzw. 6 Bit nichts mit der jeweiligen Signalauflösung zu tun hat, die sich weit in den LSB-Bereich hinein erstrecken kann. Im angenommenen Beispiel von Fig. 1 weist das Eingangssignal si und das Ausgangssignal so jeweils 18 Binärstellen auf, wobei die Signalkompression der Fig. 2 entspricht. Für Signalbereiche, die noch unter dem -72 dB Wert liegen, findet keine Kompression mehr statt, wodurch die Verstärkungskennlinie parallel zur 0 dB Verstärkungskennlinie verläuft.

In Fig. 3 wird der Verstärkungsverlauf von Fig. 2 dargestellt, wobei die Gesamtverstärkung v jedoch in eine Grobverstärkung vg und eine Feinverstärkung vf entsprechend Fig. 1 aufgeteilt wird. In der dB-Darstellung entspricht die konstante Grobverstärkung vg einer Parallelverschiebung der Verstärkungskennlinie vf um +36 dB. Der Feinverstärkungsverlauf vf, der eigentlich eine Signalabschwächung ist, liegt zwischen 0 dB und -36 dB für große bzw. kleine Steuersignale sb. Da die Steuersignale sb aus den inversen Hüllkurvenwerten sh bzw. sih des Ausgangssignals so gebildet werden, entspricht ein kleines Steuersignal sb in der Regel großen Eingangssignalen si und ein großes Steuersignal sb, beispielsweise mit dem normierten Wert 0,91.., einem kleinen Eingangssignal si. Daher kann das Diagramm von Fig. 3 auch so aufgefaßt werden, daß in horizontaler Richtung der Leistungsmittelwert des Eingangssignals si und in vertikaler Richtung der Steuersignalwert sb aufgetragen wird.

Ein Nachteil der Schaltung von Fig. 1 liegt wie bereits erwähnt darin, daß der Stellenumfang des Steuersignals sb so klein wie möglich gehalten wird, um den Aufwand für den Multiplizierer 100 zu begrenzen. Weist das normierte Steuersignal sb beispielsweise 10 Binärstellen auf, dann bestimmt die MSB-Stelle das Vorzeichen und die nachfolgenden 9 Binärstellen teilen den Normierungsbereich von 0 bis +1 in 512 Teilbereiche ein. Die Gesamtverstärkung v weist damit einen treppenförmigen Verlauf auf, der nebenstehend zu Fig. 3 für die zwei Extrembereiche v = 0 dB und v = +36 dB vergrößert dargestellt ist. Die Zahlenwerte an den einzelnen Stufen geben den Wert des gesamten Multiplikationsfaktors v an, der dem Wert des jeweiligen Steuersignals sb entspricht. Die einzelnen Stufen unterscheiden sich im Bereich von 0 dB maximal um 12,5 %, wohingegen die relativen Stufenunterschiede mit zunehmender Gesamtverstärkung v abnehmen, bis sie schließlich im Bereich von v = +36 dB nur noch 0,2 % betragen. Dies wird deutlich aus den vergrößert dargestellten Ausschnitten des Gesamtverstärkungsverlaufs v bei v = 0 dB und v = +36 dB. Die einzelnen Stufen, die den jeweiligen Verstärkungswerten v entsprechen, beginnen im Bereich v = 0 dB mit folgenden Stufenwerten v, die in Absolutwerten angegeben sind:
8/512 × 64, 9/512 × 64, 10/512 × 64, .....

Die Stufenfolge endigt bei v = +36 dB mit folgenden absoluten Stufenwerten v:
509/512 × 64, 510/512 × 64 und schließlich der letzte Wert mit 511/512 × 64.

Da im Bereich v = 0 dB insbesondere große Eingangssignale si multipliziert werden, ergibt das dort ein hohes Quantisierungsrauschen, das durch die Erfindung beseitigt werden soll. Kleine Eingangssignale si, beispielsweise als Monentanwerte si(t) im Übergangsbereich zwischen beiden Hüllkurven sih, sih', werden zwar mit den gleichen Faktoren v bzw. Steuersignalwerten sb multipliziert, der Absolutwert des Quantisierungsfehlers ist dort jedoch entsprechend klein und daher vernachlässigbar. Mittels eines Multiplizierers 100 nach der Erfindung wird nun erreicht, daß in dem kritischen Bereich kleiner Steuersignale sb die Auflösung deutlich verbessert wird, so daß dort die Quantisierungssprünge nicht mehr stören.

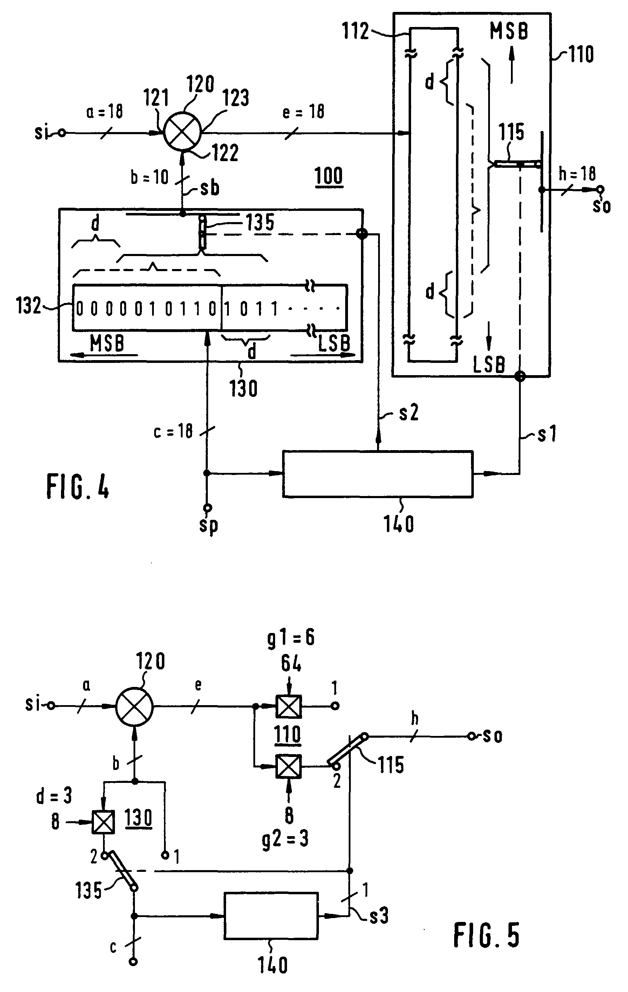

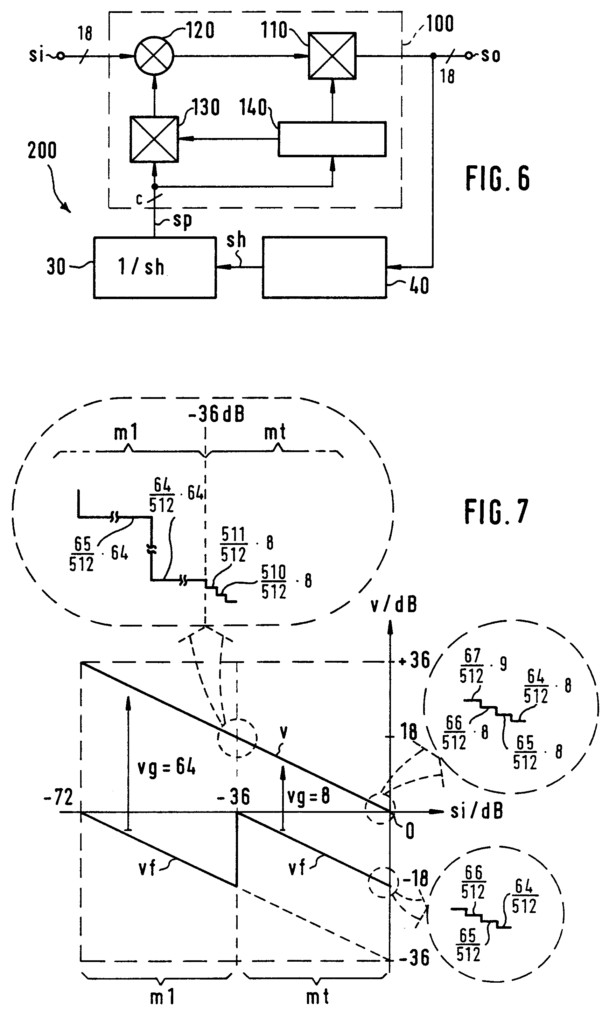

In Fig. 4 ist ein Multiplizierer 100 nach der Erfindung dargestellt, dessen Schaltungszustand dem erhöhten Auflösungsbereich entspricht. Er enthält außer der ersten Stellenschiebeeinrichtung 110 eine zweite Stellenschiebeeinrichtung 130, die eingangsseitig mit einem primären Steuersignal sp von c Binärstellen gespeist ist und ausgangsseitig ein sekundäres Steuersignal sb mit b Binärstellen dem Steuereingang 122 des Feinmultiplizierers 120 zuführt, wobei das primäre Steuersignal sp mindestens d Binärstellen mehr aufweist als das sekundäre Steuersignal sb. Der Signaleingang 121 des Feinmultiplizierers weist a Binärstellen auf und sein Ausgang 123 e Binärstellen. Beispiele für die Anzahl der Binärstellen sind in Fig. 1 als Zahlenwerte neben den einzelnen Datenleitungen eingetragen. Der Multiplizierer 100 enthält ferner eine Steuereinrichtung 140, deren Eingang mit dem primären Steuersignal sp gespeist ist und deren Ausgänge ein erstes und ein zweites Schiebesignal s1, s2 abgeben, die die erste bzw. zweite Stellenschiebeeinrichtung 110, 130 steuern. Zur Auflösungsverbesserung wirken die beiden Stellenschiebeeinrichtungen 110, 130 nun so zusammen, daß in einem begrenzten Multiplikationsbereich mt (vgl. Fig. 7) das sekundäre Steuersignal sb um einen Zweierpotenzwert stärker und das Ausgangssignal des Feinmultiplizierers 120 um den gleichen Zweierpotentzwert schwächer gewichtet wird, wodurch das Ausgangssignal so, das h Binärstellen aufweist, in der Gewichtung unverändert bleibt. Im Innern des Multiplizierers 100 findet somit eine Änderung der Gewichtungsverteilung zwischen dem Feinmultiplizierer und dem Grobmultiplizierer statt. Dies hat natürlich nur dann eine positive Auswirkung, wenn nicht nur der ursprüngliche Inhalt der b Stellen des sekundären Steuersignales sb in Richtung des MSB-Bereiches geschoben wird, sondern der freigewordene LSB-Bereich durch echte Signalstellen aus dem primären Steuersignal sp aufgefüllt wird. Dies ist aber ohne weiteres der Fall, weil das primäre Steuersignal sp c echte Signalstellen an die zweite Stellenschiebeeinrichtung 130 liefert. Es ist selbstverständlich, daß durch die Stellenverschiebung keine echten Signalstellen im MSB-Bereich des sekundären Steuersignals sb abgeschnitten werden dürfen. Dies kann leicht verhindert werden, wenn die Steuereinrichtung 140 zur Erkennung des Multiplikationsbereiches mt das primäre Steuersignal sp daraufhin überwacht, daß mindestens eine ausreichende Anzahl von MSB-Stellen leer ist, andernfalls wird kein erstes oder zweites Schiebesignal s1, s2 abgegeben. Diese Überwachung ist identisch mit der Festlegung des begrenzten Multiplikationsbereiches mt. Es ist ohne weiteres einsehbar, daß auf gleiche Weise auch weitere Multiplikationsbereiche mit erhöhter Auflösung festgelegt werden können. In den beiden Stellenschiebeeinrichtungen 110, 130 sind Speichereinrichtungen 112 bzw. 132 für die zugeführten Daten vorhanden, beispielsweise in Form von Schieberegistern oder Puffern, oder die Stellenverschiebung wird mittels elektronischer Mehrebenenumschalter 115, bzw. 135 (= Multiplexer) realisiert, die den Abgriff der jeweils gewünschten Binärstellen an den Datenleitungen bewirken.

In Fig. 5 ist ein besonders vorteilhaftes Ausführungsbeispiel des Multiplizierers 100 nach der Erfindung dargestellt. Sofern die Teilschaltung identisch zu den Teilschaltungen von Fig. 1 oder Fig. 4 sind, weisen sie die gleichen Bezugszeichen auf. Eine nochmalige Erörterung erübrigt sich daher. In Fig. 5 ist die erste und zweite Stellenschiebeeinrichtung 110 bzw. 130 mittels der erwähnten Mehrebenenumschalter realsiert. Der erste Mehrebenenumschalter 115 weist zwei Schaltpositionen 1, 2 auf, die bezüglich den e Stellen des Feinmultiplizierer-Ausgangssignals in der ersten Position 1, der Grundposition, eine Gewichtung um den Faktor 64 und in der zweiten Position 2 eine Gewichtung um den Faktor 8 bewirken. Dies wird allein durch einen unterschiedlichen Abgriff der e Stellen bewirkt. Die erste Schaltposition 1 bewirkt eine Verschiebung der Daten um g1 = 6 Binärstellen in MSB-Richtung und die zweite Schaltposition 2 um g2 = 3 Binärstellen. Entsprechend bewirkt der zweite elektronische Mehrebenen-Umschalter 135 in der ersten Schaltposition 1, der Grundposition, gar keine Stellenverschiebung, sondern verbindet die b höchstwertigen Stellen des primären Steuersignals sp direkt mit den b Eingangsstellen des Feinmultiplizierers 120. In der zweiten Schaltposition 2 werden die b Stellen des sekundären Steuersignals sb um d = 3 Binärstellen in LSB-Richtung versetzt am primären Steuersignal sp abgegriffen - dies entspricht einer Gewichtung mit dem Faktor 8. Zur Steuerung der beiden Mehrebenenumschalter ist lediglich ein einziges Bit als Steuersignal s3 erforderlich.

Die erste Schaltposition 1 entspricht einem ersten Multiplikationsbereich m1 (vgl. Fig. 7) mit der Grundauflösung und die zweite Schaltposition 2 entspricht dabei dem begrenzten Multiplikationsbereich mt mit der erhöhten Auflösung. Die jeweiligen Stellenverschiebungen werden in Fig. 5 symbolartig als Grobmultiplizierer dargestellt. Es handelt sich jedoch um eine feste Zuordnung der Eingänge der beiden Mehrebenenumschalter, die insbesondere dann vorzuziehen ist, wenn der Bereich mt der erhöhten Auflösung fest vorgegeben ist.

In Fig. 6 wird der Multiplizierer 100 in Verbindung mit den Funktionseinheiten eines Signalkompressors 200 dargestellt, der beispielsweise auf vorteilhafte Weise in einem digitalen Signalprozessor zur Sprachkompression verwendet werden kann, vgl. auch Fig. 4 und das Anwendungsbeispiel von Fig. 1. Bei derartigen Sprachkompressoren ist eine bestimmte Kompressionskennlinie v vorgegeben, beispielsweise mit einem Quadratwurzelverlauf entsprechend Fig. 2. Signale mit niederen Pegeln werden dabei angehoben und sind daher unempfindlicher gegenüber Störungen auf dem Übertragungsweg. Die Wurzelabhängigkeit hat den Vorteil, daß auf der Empfängerseite der ursprüngliche Dynamikumfang mittels einer Multiplikation des empfangenen Signals mit seiner eigenen Hüllkurve wiederhergestellt werden kann. In Fig. 6 bildet der Signalpfad für die Steuerung des Feinmultiplizierers 120 eine Regelschleife, in der das digitale Ausgangssignal so einem Hüllkurvendetektor 40 zugeführt wird, der daraus das positive, leistungsbezogene Hüllkurvensignal sh bestimmt. Aus dem Hüllkurvensignal wird mittels des Funktionsgenerators 30 der inverse Wert 1/sh gebildet. Nach einer Tiefpaß- oder Integralfilterung erhält man daraus das primäre Steuersignal sp mit c Binärstellen, die dem Eingang der zweiten Stellenschiebeeinrichtung 130 zugeführt sind.

Aus der Patentanmeldung DE 195 38 935 (ITT Case: C-DIT-1670) geht hervor, wie auf besonders vorteilhafte Weise der Hüllkurvendetektor 40 und der Funktionsgenerator 30 als monolithisch integrierbare Schaltungen realisiert sein können. Es wird darauf hingewiesen, daß es für die Realisierung der Erfindung selbstverständlich unerheblich ist, ob die einzelnen Funktionsteile mittels fest- oder freiprogrammierbarer Prozessoren oder mittels spezieller Schaltungen oder in gemischter Form realisiert sind. Die jeweilige Auswahl ist allein in das Belieben des Fachmannes gestellt.

In Fig. 7 wird schließlich als Beispiel für die Erfindung das Verstärkungsdiagramm dargestellt, das sich bei dem Multiplizierer 100 aus der Schaltungsanordnung von Fig. 6 ergibt. Die dB-Darstellung entspricht dabei den Darstellungen von Fig. 2 und Fig. 3. Der besseren Übersicht wegen ist in allen drei Diagrammen der Verlauf der gewünschten Gesamtverstärkung v identisch. Im Verstärkungsbereich mt wird die Verstärkung vf des Feinverstärkers 120 um den konstanten Verstärkungsfaktor vg = 8 bzw. +18 dB angehoben, wodurch das störende Quantisierungsrauschen um ca. -18 dB abgesenkt wird. Die Stufenhöhe der Gesamtverstärkung v wird im Verstärkungsbereich mt dadurch um den Faktor 8 gegenüber Fig. 1 reduziert.

Es wird zunächst darauf hingewiesen, daß sich für den Feinmultiplizierer 120 (Fig. 6) die Anzahl der Stufen und damit die Auflösung nicht ändert. Bei dem in Fig. 7 dargestellten Beispiel ist der Verstärkungsbereich vf des Feinmultiplizierers 120 nach wie vor in 512 gleiche Verstärkungsbereiche aufgeteilt, von denen in Fig. 7 lediglich die Bereiche 64 bis 511 verwendet werden. In Fig. 3 werden dagegen die Bereiche 8 bis 511 verwendet. In einer Ausschnittvergrößerung ist in Fig. 7 der Anfangs-Feinverstäkungsverlauf vf dargestellt, der bei vf = -18 dB beginnt und sich im Bereich m1 identisch wiederholt. Die einzelnen Verstärkungsstufen haben aufsteigend ab vf = -18 dB folgende Werte:
64/512, 65/ 512, 66/512, ...... und schließlich als letzte Stufe 511/512.

Die Stufen für die Gesamtverstärkung v beginnen bei 0 dB mit folgenden Werten, vergleiche die zugehörige Ausschnittvergrößerung in Fig. 7:
64/512 × 8, 65/512 × 8, 66/512 × 8, 67/512 × 8, usw.

Der Übergang vom Verstärkungsbereich mt auf den Bereich m1 bei v = 18 dB ist in Fig. 7 ebenfalls als ein Ausschnitt vergrößert dargestellt, wobei die Darstellung der unterschiedlichen Stufenhöhen nur schematisch und nicht maßstäblich zu verstehen ist. Die Gesamtverstärkung v, die dabei dem jeweiligen absoluten Stufenniveau entspricht, nimmt dabei folgende Werte an:
509/512 × 8, 510/512 × 8, 511/512 × 8, dann folgt der Übergang bei v = +18 dB in den ersten Verstärkungsbereich m1 mit:
64/512 × 64, 65/512 × 64, 66/512 × 64, ........
bis schließlich bei einem Gesamtverstärkungswert v = +36 dB die letzten und damit höchsten Stufenwerte v erreicht werden, die in Fig.7 jedoch nicht mittels einer Ausschnittsvergrößerung separat dargestellt sind:
509/512 × 64, 510/512 × 64 und schließlich die Endstufe mit 511/512 × 64,

Im Verstärkungsbereich mt wird die Grobverstärkung vg des Grobmultiplizierers 110 gegenüber Fig. 3 um -18 dB reduziert, also der Verstärkungsfaktor von vg = 64 auf vg = 8 verkleinert. Im Verstärkungsbereich m1 weist die Grundverstärkung vg = 64 auf und ist damit in diesem Bereich identisch zum Diagramm von Fig. 3. Die Grenze zwischen den beiden Multiplikationsbereichen m1, mt bei si = -36 dB ist nicht zwingend. Es ist lediglich darauf zu achten, daß die Stellenverschiebung in der Stellenschiebeeinrichtung 130 niemals so groß sein darf, daß das sekundäre Steuersignal sb den normierten Bereich von -1 bis +1 überschreitet.

## Patentansprüche

1. Digitaler Multiplizierer (100) für einen Signalprozessor, in dessen Signalpfad in beliebiger Reihenfolge eine erste Stellenschiebeeinrichtung (110) als Grobmultiplizierer und ein Feinmultiplizierer (120) liegt, der einen Signaleingang (121) mit a Binärstellen, einen Steuereingang (122) mit b Binärstellen und einen Signalausgang (123) mit e Binärstellen enthält, mit
- einer zweiten Stellenschiebeeinrichtung (130), die dem Steuereingang (122) des Feinmultiplizierers (120) vorgeschaltet und mit einem primären Steuersignal (sp) von c Stellen gespeist ist, von denen b Stellen über die zweite Stellenschiebeeinrichtung als sekundäres Steuersignal (sb) dem Steuereingang (122) des Feinmultiplizierers (120) zugeführt sind, und
- einer Steuereinrichtung (140), der das primäre Steuersignal (sp) zugeführt ist und die zur Erhöhung der Auflösung in mindestens einem begrenzten Multiplikationsbereich (mt) in Abhängikeit vom primären Steuersignal ein erstes und zweites Schiebesignal (s1, s2) für die erste bzw. zweite Stellenschiebeeinrichtung (110, 130) erzeugt, wodurch
- das sekundäre Steuersignal (sb), unter Einbeziehung von d sich in LSB-Richtung anschließenden Stellen des primären Steuersignals (sp), um den Zweierpotenzwert 2^{d} höher und
- das Ausgangssignal (so) der ersten Stellenschiebeeinrichtung (110) um den Zweierpotenzwert 2^{d} niedriger gewichtet sind.

2. Multiplizierer nach Anspruch 1, dadurch gekennzeichnet, daß die erste Stellenschiebeeinrichtung (110) mittels eines ersten elektronischen Mehrebenenumschalters (115) realisiert ist, dessen erste Eingänge (1) stellenrichtig entsprechend einer Grundverstärkung (vg) mit dem Signalpfad verbunden sind und dessen zweite Eingänge (2) demgegenüber um d Stellen in MSB-Richtung versetzt angeschlossen sind.

3. Multiplizierer nach Anspruch 2, dadurch gekennzeichnet, daß die d Stellen im MSB-Bereich der ersten Eingänge (1) Erweiterungsstellen in dem binären Zahlensystem sind.

4. Multiplizierer nach Anspruch 1, dadurch gekennzeichnet, daß die zweite Stellenschiebeeinrichtung (130) mittels eines zweiten elektronischen Mehrebenenumschalters (135) realisiert ist, dessen erste Eingänge (1) stellenrichtig mit den b höherwertigen Stellen des primären Steuersignals (sp) verbunden sind und dessen zweite Eingänge (2) demgegenüber um d Stellen in LSB-Richtung versetzt angeschlossen sind.

5. Multiplizierer nach einem der Ansprüche 1 bis 4, dadurch gekennzeichnet, daß das primäre Steuersignal (sp) mittels eines Hüllkurvendetektors (40) und eines Funktionsgenerators (30) gebildet ist, wobei das Eingangssignal des Hüllkurvendetektors im Signalpfad vor oder nach dem Multiplizierer (100) abgegriffen ist.

6. Multiplizierer nach Anspruch 5, dadurch gekennzeichnet, daß der Funktionsgenerator (30) einen Quotientenbildner enthält.

7. Multiplizierer nach Anspruch 6, dadurch gekennzeichnet, daß in dem Signalpfad für das primäre und/oder sekundäre Steuersignal (sp, sb) mindestens ein Tiefpaßfilter und/oder ein Integrator enthalten sind.
